# EUROPÄISCHE PATENTSCHRIFT

(11) **EP 2 624 233 B1**
(45) Veröffentlichungstag und Bekanntmachung des Hinweises auf die Patenterteilung: **13.08.2014**
(21) Anmeldenummer: 12189065.1
(22) Anmeldetag: 18.10.2012
(51) Int. Cl.: G07B 15/06, G08G 1/00, G08G 1/01, G08G 1/015, G08G 1/017, G08G 1/054

(54) **Verfahren zur Kontrolle in einem Straßenmautsystem**
Method for controlling a road toll system
Procédé de contrôle dans un système de péage routier

(30) Priorität: 02.02.2012 EP 12153628
(43) Veröffentlichungstag der Anmeldung: 07.08.2013
(73) Patentinhaber: Kapsch TrafficCom AG, 1120 Wien (AT)
(72) Erfinder: Leopold, Alexander, 1100 Wien (AT); Nagy, Oliver, 1190 Wien (AT)
(74) Vertreter: Weiser, Andreas

(56) Entgegenhaltungen:
- EP-A2- 1 783 692
- WO-A1-2004/027730
- WO-A1-2011/129800
- DE-A1- 3 932 029

## Beschreibung

Diese Anmeldung beansprucht die Priorität der Europäischen Patentanmeldung Nr. 12153628.8 vom 2. Februar 2012, welche hier durch Bezugnahme aufgenommen wird.

Die vorliegende Erfindung betrifft ein Verfahren zur Kontrolle in einem Straßenmautsystem, das auf von Fahrzeugen mitgeführten Onboard-Units basiert.

In modernen Straßenmautsystemen werden mautpflichtige Fahrzeuge mit Onboard-Units (OBUs) ausgestattet, mit deren Hilfe die Fahrzeuge verortet und in der Folge ihre Straßennutzungen vermautet (vergebührt) werden können. Die OBUs können von verschiedenster Art sein: Einerseits können die OBUs von "selbst-verortendem" Typ sein, d.h. ihren Ort fortlaufend selbst bestimmen, z.B. mittels eines Satellitennavigationsempfängers im Rahmen eines Satellitennavigationssystems (global navigation satellite system, GNSS), und die so ermittelten Orte ("position fixes") entweder direkt einer Zentrale des Straßenmautsystems melden, sei es über ein Mobilfunknetz oder ein Netz geographisch verteilter Funkbaken, oder in Form "abstrahierter", aus den Ortsmeldungen berechneter Mauttransaktionen. Alternativ könnten solche GNSS-OBUs ihre Ortsmeldungen oder Mauttransaktionen einfach speichern oder daraus berechnete Gebühren von einem internen Mautguthaben abbuchen. Anderseits können die OBUs von "fremd-verortetem" Typ sein, beispielsweise mit Hilfe einer Vielzahl geographisch über das Straßenmautsystem verteilter Maut- bzw. Funkbaken, welche jeweils Kurzreichweiten- bzw. DSRC-Funkkommunikationen (dedicated short range communications) mit passierenden OBUs aufnehmen und aufgrund ihrer begrenzten Kommunikationsreichweite diese damit auf ihren bekannten Bakenort lokalisieren. Entsprechende Ortsmeldungen bzw. daraus berechnete Mauttransaktionen können dann von den OBUs oder den Mautbaken erzeugt und entweder in den OBUs oder in der Zentrale verarbeitet werden.

Dokumente EP1783692 und WO2011/129800 beschreiben solche bekannte Kontrollverfahren für Straßenmautsystem.

Die Erfindung setzt sich zum Ziel, neuartige Kontrollverfahren zur Feststellung und Ahndung (Enforcement) von Verkehrs - oder Mautdelikten in solchen Straßenmautsystemen zu schaffen.

Dieses Ziel wird mit einem Verfahren zur Kontrolle in einem Straßenmautsystem, das auf von Fahrzeugen mit Fahrzeugkennzeichen mitgeführten Onboard-Units basiert, unter Verwendung zumindest eines Aufzeichnungsfahrzeugs und zumindest eines Kontrollfahrzeugs, die eindeutige Kennungen haben und über ein zellulares Mobilfunknetz mit einem Vermittlungsserver in Verbindung stehen, umfassend:

Registrieren der Kennung eines Aufzeichnungsfahrzeugs und seiner aktuellen Mobilfunknetz-Zellkennung im Vermittlungsserver;

Auswählen einer Zellkennung in einem Kontrollfahrzeug und Senden der ausgewählten Zellkennung und der Kennung des Kontrollfahrzeugs an den Vermittlungsserver;

Zuordnen der Kontrollfahrzeug-Kennung zu jener Aufzeichnungsfahrzeug-Kennung, zu der eine der ausgewählten Zellkennung gleiche Zellkennung registriert ist;

Detektieren eines Verkehrs- oder Mautdelikts einer Onboard-Unit oder eines diese mitführenden Fahrzeugs und Lesen dessen Fahrzeugkennzeichens mittels des Aufzeichnungsfahrzeugs;

Senden eines Deliktdatensatzes enthaltend das gelesene Kennzeichen und die Aufzeichnungsfahrzeug-Kennung an den Vermittlungsserver, Ermitteln der zugeordneten Kontrollfahrzeug-Kennung und Senden des Deliktdatensatzes an das durch die ermittelte Kennung identifizierte Kontrollfahrzeug;

Lesen des Kennzeichens eines passierenden Fahrzeugs mittels des Kontrollfahrzeugs, Überprüfen des gelesenen Kennzeichens mit dem im Deliktdatensatz enthaltenen Kennzeichen und, im Falle der Übereinstimmung, Ausgeben einer Alarmmeldung.

Die Erfindung beruht auf dem neuartigen Ansatz eines verteilten Kontrollsystems, welches sich aus einer ersten Flotte von Aufzeichnungsfahrzeugen ("Jägern") und einer zweiten Flotte von Kontrollfahrzeugen ("Sammlern") zusammensetzt, die über einen gemeinsamen Vermittlungsserver miteinander kommunizieren. Die "Jäger" sind gut ausgerüstet zur automatischen Delikterkennung und brauchen für Deliktfahrzeuge keine weiteren Veranlassungen zu treffen als die Erzeugung von Deliktdatensätzen; ihre Interaktionen mit den kontrollierten Fahrzeugen sind kurz, sie können sich dadurch schnell bewegen, auch Fahrzeuge mit hoher Geschwindigkeit oder im Gegenverkehr kontrollieren und gering in ihrer Anzahl gehalten werden, was die Gesamtausrüstungskosten in Grenzen hält. Die "Sammler" benötigen vergleichsweise geringe Ausrüstung, da sie keine Delikte feststellen, sondern lediglich Fahrzeugkennzeichen lesen, zugehörige Deliktdatensätze suchen und bei Deliktfahrzeugen Alarm geben. Die Besatzung des Kontrollfahrzeugs kann dann z.B. eine Anhaltung des Deliktfahrzeugs und eine manuelle Kontrolle vor Ort durchführen. Aufgrund ihrer geringen Ausrüstungserfordernisse können Kontrollfahrzeuge (Sammler) in großer Zahl vorgesehen werden und dadurch im einzelnen auch zeitaufwendige Vor-Ort-Kontrollen durchführen. Beispielsweise können bestehende Flotten von Spezialfahrzeugen wie Einsatzfahrzeuge, öffentliche Verkehrsmittel, Taxis usw. zu Kontrollfahrzeugen umgerüstet werden und ihre Kontrollfunktionen mobil im fließenden und stationär im ruhenden Verkehr ausüben, während einige wenige komplexe Aufzeichnungsfahrzeuge (Jäger) sich ständig hochmobil im Fließverkehr bewegen und Deliktdatensätze generieren. Im Ergebnis können automatische Kontrollen von Onboard-Units selbst in großräumigen, weit verzweigten und mit Hochgeschwindigkeits- und Gegenverkehrsstrecken versehenen Straßennetzen durchgeführt werden.

Durch die erfindungsgemäße Verwendung von Zellkennungen eines zellularen Mobilfunknetzes zur Gebietszuordnung von Jägern und Sammlern wird eine Ortsanonymisierung in Form einer sehr groben Ortsunschärfe der Positionen der Jäger erreicht; die Orte der Sammler bleiben überhaupt geheim: Die Sammler können Deliktdatensätze von Jägern in einer gewünschten Mobilfunkzelle abonnieren bzw. buchen, wobei die Auswahl der gewünschten Mobilfunkzelle einzig dem Sammler überlassen bleibt. Selbst ein Abhören der Mobilfunknetzkommunikationen zwischen Jägern, Vermittlungsserver und Sammlern oder ein Datenleck im Vermittlungsserver würde damit keine konkreten Informationen über die Positionen der Jäger und überhaupt keine Informationen über die Positionen der Sammler liefern. Ein Missbrauch des Systems, wie er beispielsweise durch das Veröffentlichen der aktuellen Positionen von Kontrollfahrzeugen im Internet oder in Radiosendungen erfolgen könnte, wird dadurch mit hoher Sicherheit verhindert und die Wirksamkeit des Kontrollverfahrens wesentlich gesteigert.

Die jeweils aktuelle Zellkennung eines Aufzeichnungsfahrzeugs kann von diesem selbst, z.B. durch Abfrage von Empfangs- bzw. Konfigurationsdaten seines Mobilfunknetz-Sendeempfängers, ermittelt und an den Vermittlungsserver gesandt werden. Alternativ könnte die aktuelle Zellkennung eines Aufzeichnungsfahrzeugs auch vom Vermittlungsserver anhand von Informationen ermittelt werden, die dieser aus dem Mobilfunknetz empfängt oder abfragt, z.B. durch Kommunikation mit dessen Vermittlungszentrale (mobil switching center, MSC) oder Basisstationen (base station transceivers, BST).

Gemäß einer ersten bevorzugten Ausführungsform der Erfindung erfolgt das Auswählen der Zellkennung im Kontrollfahrzeug durch Benutzerauswahl. Der Benutzer kann beispielsweise anhand von Landkarten und Tabellen die Zellkennung der für ein bestimmtes geographisches Gebiet zuständigen Mobilfunknetzzelle nachschlagen und über eine Eingabeeinrichtung und den Mobilfunknetz-Sendeempfänger seines Kontrollfahrzeugs an den Vermittlungsserver senden. Optional werden dazu - auf Anfrage oder periodisch - die im Vermittlungsserver registrierten Zellkennungen bevorzugt an das Kontrollfahrzeug gesandt und dort dem Benutzer zur Benutzerauswahl angezeigt. Zusätzlich könnten auch die zu den Zellkennungen registrierten Kontrollfahrzeug-Kennungen mitgesandt und dem Benutzer angezeigt werden, sodass dieser beispielsweise Information darüber erhält, wie viele Kontrollfahrzeuge sich aktuell in einer bestimmten Mobilfunkzelle befinden.

Die auswählbaren Zellkennungen (und optional die dazu registrierten Kontrollfahrzeug-Kennungen) können sowohl in einer Liste dem Benutzer angezeigt werden, als auch bevorzugt graphisch aufbereitet auf einer Anzeige als Bereiche einer digitalen Landkarten, um die Auswahl zu erleichtern.

In einer zweiten bevorzugten Ausführungsform der Erfindung ermittelt das Kontrollfahrzeug selbst - beispielsweise durch Abfrage von Konfigurations- oder Empfangsdaten seines Mobilfunknetz-Sendeempfängers - seine eigene aktuelle Mobilfunknetz-Kennung, und diese wird als ausgewählte Zellkennung zur Versendung an den Vermittlungsserver verwendet. Die Sammler (Aufzeichnungsfahrzeuge) abonnieren damit gleichsam automatisch die Deliktdatensätze der sich in derselben Mobilfunkzelle befindenden Jäger (Kontrollfahrzeuge), ohne dass konkrete Ortsinformationen über die Standorte von Jägern oder Sammlern ausgetauscht werden und damit der Gefahr eines Datenmissbrauchs unterliegen würden.

Das Aufzeichnungsfahrzeug kann den Deliktort selbst bestimmen, z.B. mittels eines Satellitennavigationsempfängers, oder von der kontrollierten Onboard-Unit selbst empfangen, z.B. wenn diese eine eigene Positionsbestimmungseinrichtung aufweist oder ihren Ort auf andere Weise, z.B. von einer ortsfesten Funkbake, erfährt.

Das Verfahren der Erfindung ist sowohl für (DSRC-)OBUs vom fremd-verorteten Typ geeignet, die bereits eine DSRC-Funkschnittstelle haben, als auch für (GNSS-)OBUs vom selbst-verortenden Typ, welche zusätzlich eine DSRC-Funkschnittstelle für Kontroll- und Einstellungszwecke haben.

Bevorzugt werden wesentlich mehr Kontrollfahrzeuge vorgesehen als Aufzeichnungsfahrzeuge, insbesondere bevorzugt um mindestens eine Zehnerpotenz mehr.

Die vom Aufzeichnungsfahrzeug detektierten Delikte können alle Arten von Maut- oder Verkehrsdelikten sein, welche automatisch detektierbar sind, beispielsweise Geschwindigkeitsübertretungen detektiert mit Hilfe einer Geschwindigkeitsmesseinrichtung des Aufzeichnungsfahrzeugs, Fahrverbote (auch zeitbezogene) detektiert mit Hilfe einer Fahrzeugdetektionseinrichtung des Aufzeichnungsfahrzeugs, usw. Bevorzugt sind die Delikte Mautdelikte, und insbesondere bevorzugt solche, die anhand eines aus der Onboard-Unit über die DSRC-Funkschnittstelle auslesbaren Mautparameters festgestellt werden können: Solche Mautparameter können beliebiger Art sein und z.B. über Einsatzzweck des Fahrzeugs (z.B. Einsatzfahrzeug, öffentliches Verkehrsmittel, Privatfahrzeug, Lastkraftwagen usw.), Status des Benutzers des Fahrzeugs, über Größe, Gewicht, Schadstoffklasse, Anzahl der Achsen des Fahrzeugs oder die Beziehung zwischen (nutzerspezifischer) Onboard-Unit und physischem Fahrzeug (z.B. über die Nummerntafeln referenziert) usw. Auskunft geben. Bei jeder Berechnung einer Maut, sei es bei einer Kommunikation mit einer Mautbake oder bei der Berechnung von Mauttransaktionen aus Ortsmeldungen, wird auf die Mautparameter der OBU zurückgegriffen, um die Höhe der Maut - oder überhaupt die Mautpflicht - zu ermitteln.

Eine bevorzugte Ausführungsform der Erfindung zeichnet sich demgemäß dadurch aus, dass das Detektieren im Aufzeichnungsfahrzeug durch Auslesen zumindest eines Mautparameters aus der Onboard-Unit über die DSRC-Funkschnittstelle und Überprüfen des Mautparameters auf Korrektheit erfolgt.

In noch einem weiteren Aspekt befasst sich die Erfindung speziell mit der Kontrolle fahrzeugformspezifischer Mautparameter: Solche fahrzeugformspezifische Parameter, welche die Höhe einer zu entrichtenden Straßenmaut bestimmen, können beispielsweise die Abmessungen des Fahrzeugs, seine aktuelle Achsanzahl (mit oder ohne Anhänger), eine bestimmte Karosserieform wie LKW oder PKW usw. sein und als Mautparameter in einer Onboard-Unit eingestellt oder gespeichert sein. Um missbräuchliche Fehleinstellungen solcher Mautparameter zu detektieren, weist das Aufzeichnungsfahrzeug einen DSRC-Sendeempfänger zum Auslesen des Mautparameters eines passierenden Fahrzeugs und einen Sensor zum Erfassen eines Formparameters des Fahrzeugs auf, wobei das Aufzeichnungsfahrzeug dafür ausgebildet ist, den Mautparameter auf Konsistenz mit dem Formparameter zu prüfen und bei Inkonsistenz den Deliktdatensatz mit Deliktort und Kennzeichenleseergebnis des Fahrzeugs an den Vermittlungsserver zu senden.

Alternativ oder zusätzlich kann das Aufzeichnungsfahrzeug mit einer Einrichtung zur Messung von Geschwindigkeit und bevorzugt Fahrtrichtung eines passierenden Fahrzeugs ausgestattet sein, um das Verkehrs- oder Mautdelikt auch auf Grundlage dieser Messwerte zu bestimmen.

Wie erörtert können der erfasste Formparameter und der ausgelesene Mautparameter bevorzugt Fahrzeuglänge oder Achsanzahl sein, insbesondere nach Klassen unterteilt ("klassifiziert"). Der Formparameter eines zu kontrollierenden Fahrzeugs kann dabei auf verschiedenste Arten erfasst werden, beispielsweise mit Hilfe einer elektronischen Kamera mit Objekterkennungssoftware, mit Hilfe eines Radardetektors zur Fahrzeugvermessung oder Detektion seiner Räder, oder bevorzugt mit Hilfe eines Laserentfernungsmessers oder Laserscanners, welcher zumindest einen Teil der Form des Fahrzeugs durch Abtasten während der Passage erfasst: Durch die Relativbewegung zwischen Aufzeichnungsfahrzeug und kontrolliertem Fahrzeug kann ein 2D - oder 3D-Abbild (Profil oder "Punktewolke" von Laserentfernungsmesspunkten) zumindest eines Teils des Fahrzeugs erstellt und daraus der Formparameter gewonnen werden, z.B. durch Objekterkennungssoftware, beispielsweise als Fahrzeuglänge oder Achsanzahl, woraus z.B. auf eine bestimmte Fahrzeugklasse (PKW, LKW, LKW mit Anhänger, usw.) geschlossen werden kann.

Weitere Merkmale und Vorteile der Erfindung ergeben sich aus der nachfolgenden Beschreibung eines bevorzugten Ausführungsbeispiels, welches auf die begleitenden Zeichnungen Bezug nimmt, in denen zeigen:
Fig. 1 die Funktionsweise der Kontrollvorrichtungen und des Kontrollverfahrens der Erfindung in einer Fahrzeugpopulation eines Straßennetzes und in einem zellularen Mobilfunknetz schematisch im Überblick;
die Fig. 2a und 2b verschiedene Vorrichtungskomponenten und Verfahrensschritte bei der Passage eines zu kontrollierenden Fahrzeugs an einem Aufzeichnungsfahrzeug;
die Fig. 3a und 3b verschiedene Vorrichtungskomponenten und Verfahrensschritte bei der Passage eines zu kontrollierenden Fahrzeugs an einem Kontrollfahrzeug; und
die Fig. 4a - 4c ein Flussdiagramm des Verfahrens der Erfindung.

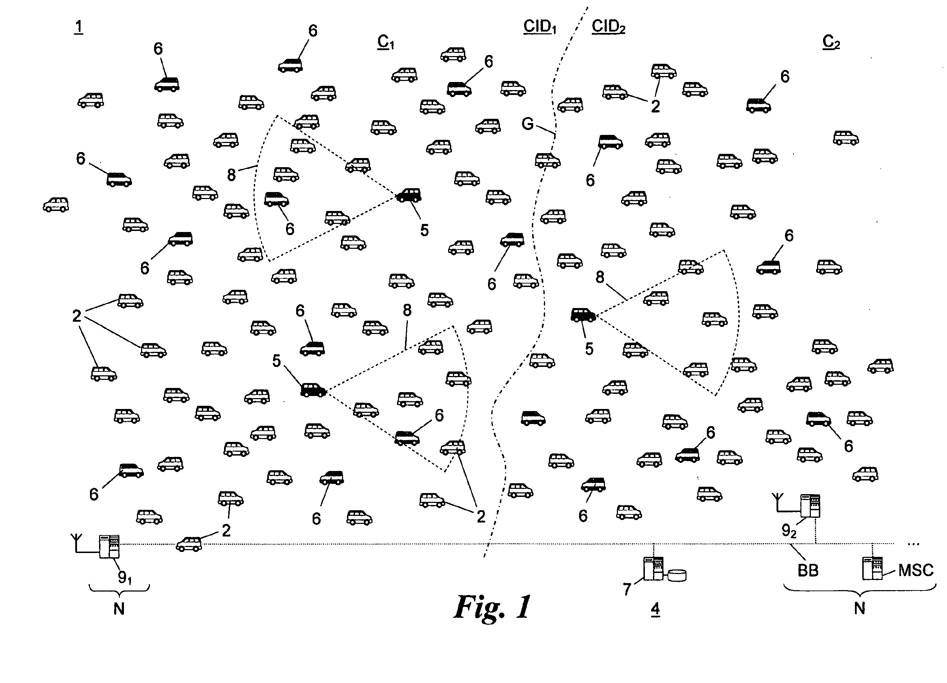

Fig. 1 zeigt schematisch ein Straßenmautsystem 1, in dessen Rahmen sich eine Vielzahl mautpflichtiger Fahrzeuge 2 auf einem nicht näher dargestellten, z.B. landesweiten Straßennetz bewegen. Das Straßenmautsystem 1 dient dazu, beliebige Straßennutzungen der Fahrzeuge 2 zu vermauten (vergebühren), und zwar sowohl Nutzungen von Verkehrsflächen des fließenden Verkehrs in Form von z.B. Wege-, Gebiets-, Übertritts- oder Grenzmaut als auch von Verkehrsflächen des ruhenden Verkehrs in Form von z.B. Aufenthalts- oder Parkgebühren.

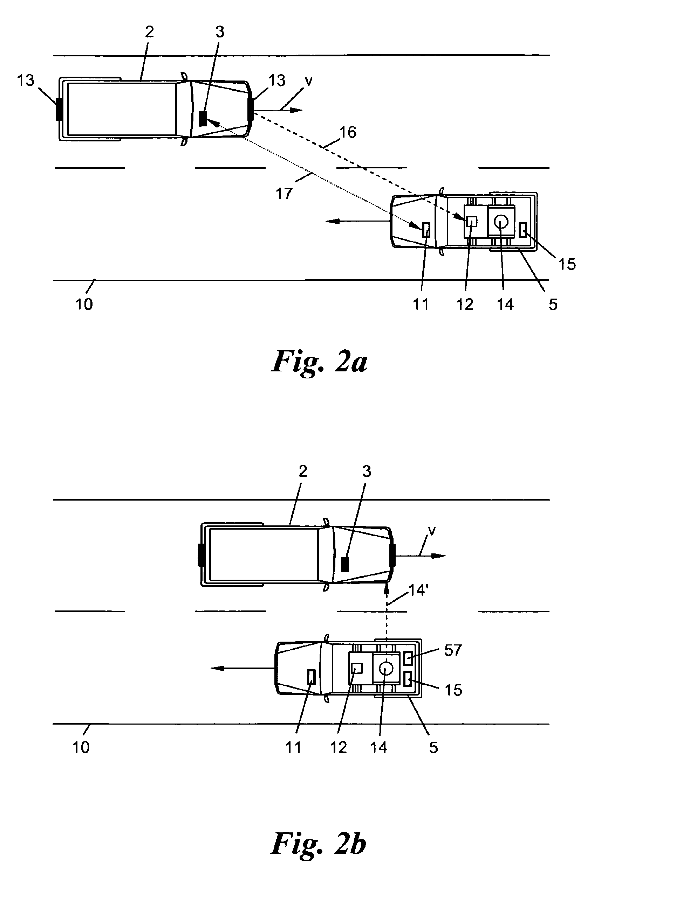

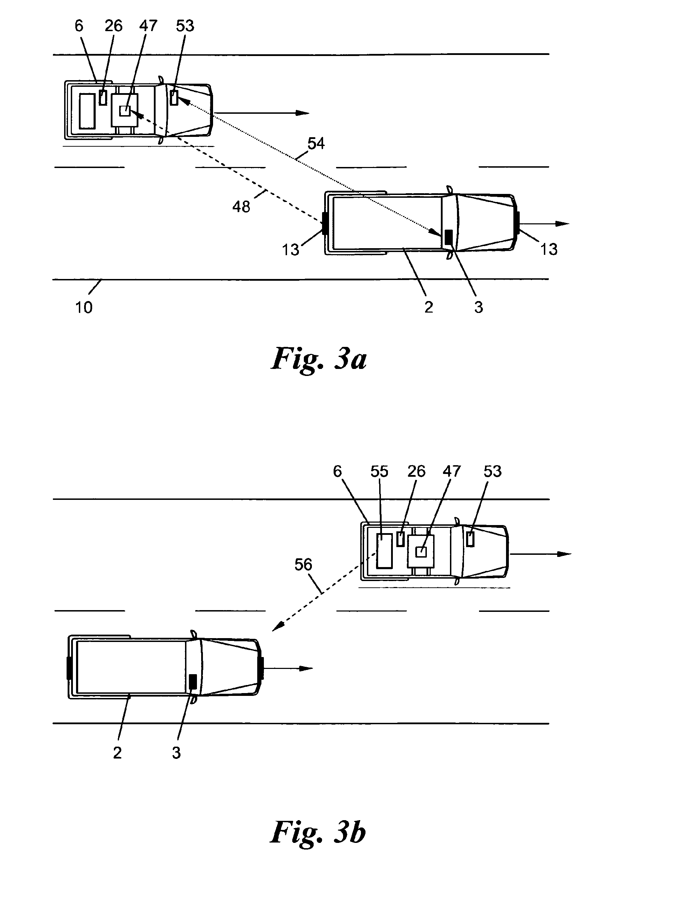

Zu diesem Zweck sind gemäß den Fig. 2 und 3 alle mautpflichtigen Fahrzeuge 2 mit Onboard-Units (OBUs) 3 ausgestattet, mit deren Hilfe die Fahrzeuge 2 verortet und in der Folge vermautet werden können. Die OBUs 3 können von verschiedenster Art sein: Einerseits können die OBUs 3 von "selbst-verortendem" Typ sein, d.h. ihren Ort fortlaufend selbst bestimmen, z.B. mittels eines Satellitennavigationsempfängers im Rahmen eines Satellitennavigationssystems (global navigation satellite system, GNSS), und die so ermittelten Orte ("position fixes") entweder direkt einer Zentrale 4 des Straßenmautsystems 1 melden, sei es über ein Mobilfunknetz oder ein Netz geographisch verteilter Funkbaken, oder in Form "abstrahierter", aus den Ortsmeldungen berechneter Mauttransaktionen. Alternativ könnten solche GNSS-OBUs 3 ihre Ortsmeldungen oder Mauttransaktionen einfach speichern oder daraus berechnete Gebühren von einem internen Mautguthaben abbuchen. Anderseits können die OBUs 3 von "fremd-verortetem" Typ sein, beispielsweise mit Hilfe einer Vielzahl geographisch über das Straßenmautsystem 1 verteilter Maut- bzw. Funkbaken, welche jeweils Kurzreichweiten- bzw. DSRC-Funkkommunikationen (dedicated short range communications) mit passierenden OBUs 3 aufnehmen und aufgrund ihrer begrenzten Kommunikationsreichweite diese damit auf ihren bekannten Bakenort lokalisieren. Entsprechende Ortsmeldungen bzw. daraus berechnete Mauttransaktionen können dann von den OBUs 3 oder den Mautbaken erzeugt und entweder in den OBUs 3 oder in der Zentrale 4 verarbeitet werden.

Zur korrekten Mautberechnung im Straßenmautsystem 1 werden in den OBUs 3 jeweils ein oder mehrere für das jeweilige Fahrzeug 2 spezifische Mautparameter OC eingestellt oder gespeichert. Die Mautparameter OC können beliebiger Art sein und z.B. über Einsatzzweck des Fahrzeugs 2 (z.B. Einsatzfahrzeug, öffentliches Verkehrsmittel, Privatfahrzeug, Lastkraftwagen usw.), Status des Benutzers des Fahrzeugs 2, über Größe, Gewicht, Schadstoffklasse, Anzahl der Achsen des Fahrzeugs 2 mit oder ohne Anhänger usw. Auskunft geben. Bei jeder Berechnung einer Maut, sei es bei einer Kommunikation mit einer Mautbake oder bei der Berechnung von Mauttransaktionen aus Ortsmeldungen, wird auf die Mautparameter OC der OBU 3 zurückgegriffen, um die Höhe der Maut - oder überhaupt die Mautpflicht - zu ermitteln.

Im weiteren werden hier solche Mautparameter OC betrachtet, die durch eine Überprüfung des äußeren Erscheinungsbilds, d.h. der *Form* des Fahrzeugs 2, welches die OBU 3 mitführt, validiert (gegengeprüft) werden können. Solche Mautparameter OC werden hier als fahrzeugformspezifisch bezeichnet. Fahrzeugformspezifische Mautparameter OC können z.B. eine oder mehrere Abmessungen des Fahrzeugs 2, seine Karosserieform (Kastenaufbau, Pritschenaufbau, PKW- oder LKW-Aufbau), Anzahl der Achsen, Anzahl der Anhänger usw. sein.

Die im weiteren beschriebenen Kontrollvorrichtungen und -verfahren sind für solche OBUs 3 geeignet, deren darin eingestellte bzw. gespeicherte fahrzeugformspezifische Mautparameter OC über eine DSRC-Funkschnittstelle auslesbar sind, wie es beispielsweise bei DSRC-OBUs nach den Standards RFID, CEN-DSRC, UNI-DSRC, ITS-G5 oder WAVE (wireless access in a vehicle environment) der Fall ist. Auch GNSS-OBUs 3, welche zusätzlich eine DSRC-Funkschnittstelle zur Kontrollauslesung ihrer Mautparameter haben, sind geeignet und können in der folgenden Weise kontrolliert werden.

Darüber hinaus sind die hier beschriebenen Kontrollvorrichtungen und -verfahren natürlich auch in der Lage, festzustellen, ob ein mautpflichtiges Fahrzeug 2 überhaupt mit einer OBU 3 ausgestattet ist und - da das Auslesen der Mautparameter eine korrekt funktionierende OBU 3 voraussetzt - dabei auch die Funktionsfähigkeit einer OBU 3 mitzuprüfen.

Schließlich sind die beschriebenen Kontrollvorrichtungen- und Verfahren auch befähigt, allgemeine Verkehrsdelikte der Fahrzeuge 2 zu detektieren und zu ahnden, wie Geschwindigkeits-übertretungen, Übertretungen von (Nacht-)Fahrverboten und sonstige Verkehrsvergehen, soweit sie automatisch mit Hilfe von Messeinrichtungen, Sensoren usw. detektiert werden können.

Zu den genannten Kontrollzwecken wird im Straßenmautsystem 1 eine Kontrollvorrichtung eingesetzt, die sich aus einer ersten Flotte von Aufzeichnungsfahrzeugen 5, einer zweiten Flotte von Kontrollfahrzeugen 6 und einem Vermittlungsserver 7 in der Zentrale 4 zusammensetzt.

Bevorzugt werden wesentlich mehr Kontrollfahrzeuge 6 vorgesehen als Aufzeichnungsfahrzeuge 5. Das Verhältnis der Anzahl von Kontrollfahrzeugen 6 zu Aufzeichnungsfahrzeugen 5 beträgt bevorzugt mindestens 10:1, bevorzugt 100:1, 1000:1 und mehr. Wie nachfolgend erläutert sind Kontrollfahrzeuge 6 einfacher aufgebaut als Aufzeichnungsfahrzeuge 5 und werden mit einem anderen Bewegungsverhalten betrieben, was ein ausgewogenes Abdeckungsverhältnis der Wirkungsbereiche von Aufzeichnungs- und Kontrollfahrzeugen bei minimalen Kosten ergibt: Die Aufzeichnungsfahrzeuge 5 bewegen sich ständig im fließenden Verkehr und ihre Interaktionen mit den zu kontrollierenden Fahrzeugen 2 sind kurz, wogegen die Kontrollfahrzeuge 6 sowohl beweglich als auch stationär eingesetzt werden können und, wenn sie Anhaltekontrollen bzw. Ahndungen von Mautdelikten durchführen, längere Interaktionen mit den kontrollierten Fahrzeugen 2 eingehen.

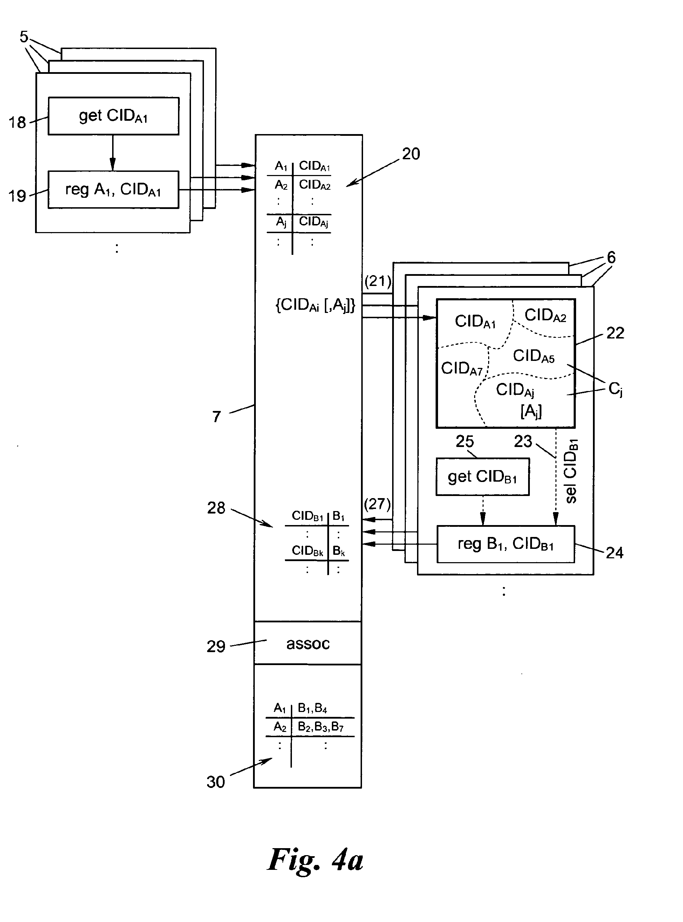

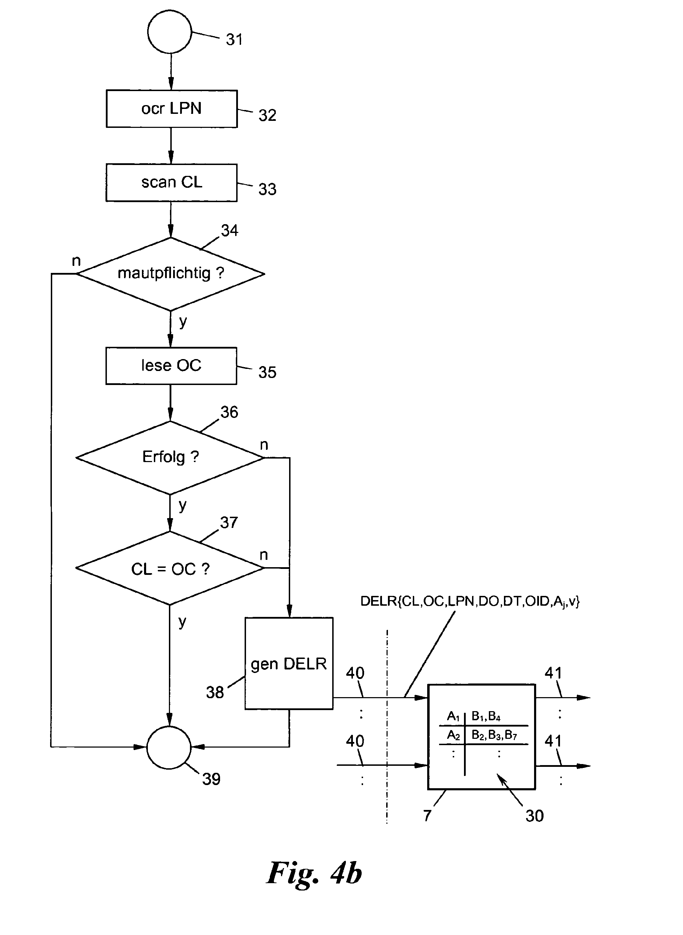

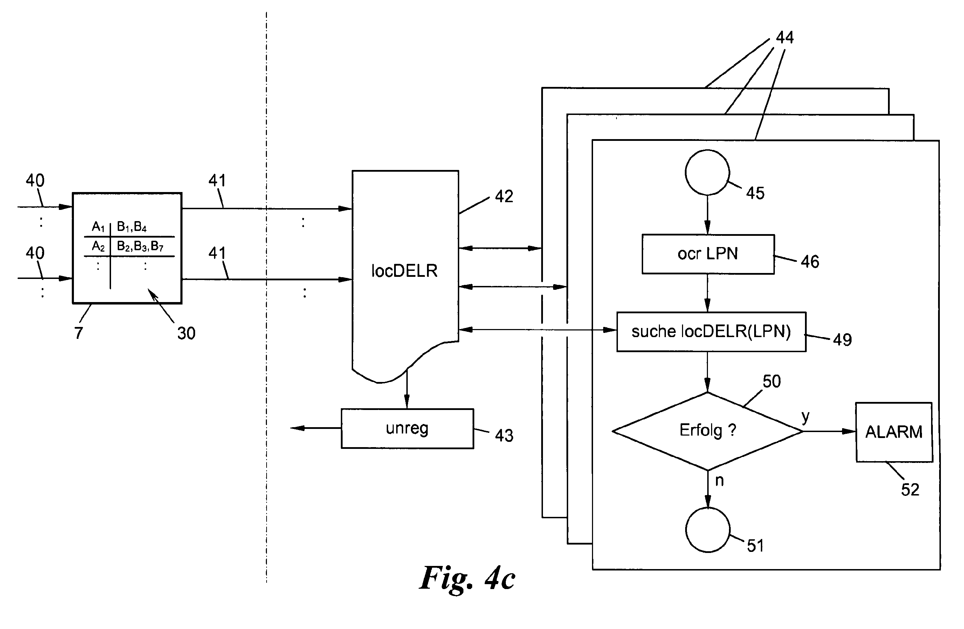

Wie Fig. 1 im Überblick zeigt, dienen die Aufzeichnungsfahrzeuge 5 dazu, in ihren jeweiligen begrenzten Erfassungsbereichen 8 Fahrzeuge 2, die ein Verkehrs- oder Mautdelikt begehen, z.B. eine Geschwindigkeitsübertretung, oder die keine, eine mangelhaft funktionierende oder falsch eingestellte OBU 3 haben, aufzuspüren und dies als Verkehrs- oder Mautdelikt in Form eines Deliktdatensatzes an den Vermittlungsserver 7 zu senden; die dabei zwischen Aufzeichnungsfahrzeug 5 und Fahrzeug 2 ablaufenden Interaktionen werden später anhand der Fig. 2 und 4 noch ausführlicher erläutert. Die Kontrollfahrzeuge 6 dienen dazu, in ihrer jeweiligen Umgebung befindliche Fahrzeuge 2 in Bezug auf für diese erhaltene Deliktdatensätze zu überprüfen und, wenn ein Deliktdatensatz für ein Fahrzeug 2 vorliegt, eine Alarmmeldung abzugeben. Die Besatzung des Kontrollfahrzeuges 6 kann dann die entsprechenden weiteren Überprüfungs- und Ahnungsmaßnahmen treffen, z.B. das Fahrzeug 2 anhalten, eine Verkehrskontrolle durchführen, eine Maut nachverrechnen, eine Geldstrafe verhängen usw. Die dabei zwischen Kontrollfahrzeug 6, Vermittlungsserver 7 und Fahrzeug 2 ablaufenden Interaktionen werden später anhand der Fig. 3 und 4 näher erläutert.

Die Aufzeichnungsfahrzeuge 5, die Kontrollfahrzeuge 6 und der Vermittlungsserver 7 stehen dazu über ein zellulares Mobilfunknetz N miteinander in Verbindung, insbesondere ein GSM-, UMTS- oder LTE-Netz, bevorzugt über paketvermittelte Verbindungen. Das zellulare Mobilfunknetz N umfasst eine Vielzahl geographisch verteilter Basisstationen 9₁, 9₂, ..., allgemein 9i, die jeweils für ein geographisches Gebiet ("Zelle") Cᵢ zuständig sind. In Fig. 1 sind 2 beispielhafte Basisstationen 9₁, 9₂ und deren Mobilfunknetz-Zellen C₁, C₂ abgegrenzt durch eine strichpunktierte Grenzlinie G veranschaulicht.

Das Mobilfunknetz N umfasst in herkömmlicher Weise eine oder mehrere Vermittlungszentrale(n) MSC, an welche die Basisstationen 9ᵢ über ein Datennetz (Backbone) BB angebunden sind, wie in der Technik bekannt. Der Vermittlungsserver 7 kann direkt an das Datennetz BB angeschlossen sein, oder an eine Vermittlungszentrale MSC, oder selbst drahtlos mit einer der Basisstationen 9ᵢ kommunizieren. Der Vermittlungsserver 7 kann auch direkt durch eine Vermittlungszentrale MSC oder eine Abrechnungszentrale 4 des Straßenmautsystems 1 realisiert sein.

In dem Mobilfunknetz N ist, wie dem Fachmann bekannt, jede Zelle Cᵢ durch eine eindeutige Zellkennung CID₁, CID₂, ..., allgemein CIDᵢ identifiziert. Die Zellkennung CIDᵢ jener Zelle Ci, in der sich ein Netzteilnehmer wie ein Aufzeichnungsfahrzeug 5 oder Kontrollfahrzeug 6 gerade befindet, ist im Mobilfunknetz N sowohl der Vermittlungszentrale MSC als auch dem jeweiligen Netzteilnehmer 5, 6 bekannt und wird im Rahmen des vorliegenden Verfahrens zur Zuordnung der geographischen Einsatzbereiche von Aufzeichnungsfahrzeugen 6 und Kontrollfahrzeugen 6 verwendet, wie später noch ausführlich erörtert.

Die Fig. 2a und 2b zeigen eines der Aufzeichnungsfahrzeuge 5 im Detail zu zwei aufeinanderfolgenden Zeitpunkten bei der Passage eines Fahrzeugs 2 auf einer Fahrbahn 10 im Gegenverkehr. Das Aufzeichnungsfahrzeug 5 verfügt über einen DSRC-Sendeempfänger 11 zur DSRC-Funkkommunikation mit der OBU 3 des Fahrzeugs 2, eine Kennzeichenleseeinrichtung 12 zum automatischen Lesen (optical character recognition, OCR) einer Kennzeichentafel 13 des Fahrzeugs 2, sowie einen Sensor 14, hier einen Laserscanner, zum Erfassen eines Parameters der Außenform des Fahrzeugs 2, im weiteren Formparameter CL genannt. Das Aufzeichnungsfahrzeug 5 ist ferner mit einem Mobilfunknetz-Sendeempfänger 15 zur Kommunikation im Mobilfunknetz N ausgestattet, wie oben erörtert.

Der Formparameter CL ist in dem vorliegenden Beispiel eine Fahrzeugklasse ("PKW", "LKW mit zwei Achsen", "LKW mit drei Achsen", "LKW mit vier Achsen", "LKW mit Anhänger" usw); es versteht sich jedoch, dass auch jede andere Eigenschaft der Außenform des Fahrzeugs 2, die mit dem Sensor 14 ermittelt werden kann, als Formparameter CL dienen kann, analog dem erörterten fahrzeugformspezifischen Mautparameter OC.

Der Sensor 14 zur Erfassung des Formparameters CL kann auf jede in der Technik bekannte Art aufgebaut werden, beispielsweise in Form einer elektronischen Kamera, die eines oder mehrere Bilder des passierenden Fahrzeugs 2, auch unter unterschiedlichen Blickwinkeln, aufnehmen kann, aus welchen Bildern dann durch Bilderkennungssoftware entsprechende Eigenschaften und Formparameter des Fahrzeugs 2 extrahiert werden können. Alternativ kann der Sensor 14 ein Radar- oder Laserentfernungsmesser oder -scanner sein, welcher das Fahrzeug 2 bei der Passage mit einem Radar- oder Laserstrahl oder -fächer 14' abtastet, um eine oder mehrere Abmessungen oder Konturen des passierenden Fahrzeugs 2 in Form eines Abtastprofils einer Abtastpunktewolke zu erfassen.

Die Kennzeichenleseeinrichtung 12 des Aufzeichnungsfahrzeugs 5 führt ein in der Technik bekanntes OCR-Lesen eines behördlichen Kennzeichens LPN auf der Kennzeichentafel 13 des Fahrzeugs 2 durch ("automatic license plate number recognition", ALNR);ihr Abbildungspfad bzw. Informationsfluss ist schematisch mit dem Pfeil 16 dargestellt.

Der DSRC-Sendeempfänger 11 des Aufzeichnungsfahrzeugs 5 baut eine DSRC-Funkkommunikation 17 mit der OBU 3 auf, um a) damit festzustellen, ob überhaupt eine OBU 3 auf dem Fahrzeug 2 vorhanden ist, b) damit (implizit) zu überprüfen, ob die OBU 3 antwortet, d.h. korrekt funktioniert, und c) den in der OBU 3 eingestellten oder gespeicherten Mautparameter OC für die weitere Überprüfung auszulesen. Bei dieser Überprüfung soll der ausgelesene Mautparameter OC der OBU 3 mit dem vom Sensor 14 erfassten Formparameter CL des Fahrzeugs 2 konsistent sein: Wenn der Mautparameter OC beispielsweise "dreiachsiger LKW" angibt, sollte der Sensor 14 auch einen damit konsistenten Formparameter CL detektieren, wenn nicht, liegt ein Mautdelikt vor und das Fahrzeug 2 ist ein "Deliktfahrzeug".

Es versteht sich, dass ein aus der OBU 3 ausgelesener Mautparameter OC zusätzlich auch noch von anderen Komponenten abhängen kann als der Fahrzeugform, z.B. dem Status oder Einsatzzweck des Fahrzeugs 2, der Uhrzeit, zeitlichen Rahmenbedingungen (z.B. Nachtfahrverbot), Fahrzeug-Emissionsklassen-Beschränkungen, Geschwindigkeiten usw., was bei der Deliktprüfung ebenfalls berücksichtigt werden kann.

Alle Komponenten DSRC-Sendeempfänger 11, Kennzeichenleseeinrichtung 12, Sensor 14 des Aufzeichnungsfahrzeugs 5 stehen untereinander - gegebenenfalls über eine (nicht dargestellte) Steuereinrichtung - in Verbindung, und das Aufzeichnungsfahrzeug 5 kann wie geschildert mit dem zentralen Vermit.tlungsserver 7 über den Mobilfunknetz-Sendeempfänger 15 drahtlos kommunizieren.

Das mit Hilfe der Komponenten Aufzeichnungsfahrzeuge 5, Kontrollfahrzeuge 6 und Vermittlungsserver 7 durchgeführte Kontrollverfahren wird nun anhand von Fig. 4 unter Bezugnahme auf die Fig. 2 und 3 im Detail erläutert. Fig. 4a zeigt dazu die initialen Registrierungs-, Auswahl- und Zuordnungsphasen des Verfahrens in Vorbereitung der anschließenden Aufzeichnungsphasen (Fig. 2, 4b) und Kontrollphasen (Fig. 3, 4c).

Gemäß Fig. 4a ermittelt jedes Aufzeichnungsfahrzeug 5 in einem ersten Schritt 18 die Zellkennung CID_{Al} jener Zelle Cᵢ des Mobilfunknetzes N, in dem es sich gerade befindet. Die Zellkennung CID_{A1} kann beispielsweise aus Kommunikationsparametern des Sendeempfängers 15 ausgelesen werden.

In einem anschließenden Schritt 19 registriert sich das Aufzeichnungsfahrzeug 5 unter einer jeweils eindeutigen Aufzeichnungsfahrzeug-Kennung A₁, A₂, ..., allgemein Aⱼ, mit der jeweiligen ermittelten Zellkennung CID_{A1}, CID_{A2}, ..., allgemein CID_{Aj}, im Vermittlungsserver 7. Die eindeutige Kennung Aⱼ eines Aufzeichnungsfahrzeugs 5 kann beliebiger Art sein, z.B. sein Fahrzeugkennzeichen, eine Identifikation des Benutzers des Aufzeichnungsfahrzeugs 5, z.B. Name, Konto- oder Kreditkartennummer, eine Kennung einer Onboard-Unit des Aufzeichnungsfahrzeugs 5, eine Identifikation seines Mobilfunknetz-Sendeempfängers 15 im Mobilfunknetz N, z.B. Telefonnummer, IMSI, TIMSI, IMEI usw. usf.

Anstatt dass das Aufzeichnungsfahrzeug 5 in Schritt 18 selbst seine Zellkennung CID_{Aj} ermittelt, kann dies auch ausgehend vom Vermittlungsserver 7 durchgeführt bzw. initiiert werden, beispielsweise indem der Vermittlungsserver 7 die Zellkennung CID_{Aj} von der Vermittlungszentrale MSC oder einer Basisstation 9ᵢ des Mobilfunknetzes N anfordert.

Es versteht sich, dass die Aufzeichnungsfahrzeuge 5 ihre jeweiligen Zellkennungsregistrierungen {Aⱼ,CID_{Aj}} im Vermittlungsserver 7 bei einem Wechsel der Zelle Cᵢ entsprechend aktualisieren, oder auch periodisch aktualisieren, und z.B. bei einem Verlassen des Mobilfunknetzes N auch wieder entsprechend de-registrieren. Der Vermittlungsserver 7 verfügt daher über eine fortlaufend aktualisierte Tabelle 20 von im Mobilfunknetz N sich bewegenden Aufzeichnungsfahrzeugen 5 mit deren jeweiligen Kennungen Aⱼ und Zellkennungen CID_{Aj}.

In anschließenden Schritten 21 können Kontrollfahrzeuge 6 somit jeweils die im Vermittlungsserver 7 in der Tabelle 20 aktuell gespeicherten ("belegten") Zellkennungen CID_{Aj} abrufen, optional auch ergänzt um die jeweils dazu registrierten Aufzeichnungsfahrzeug-Kennungen Aⱼ. Der Übermittlungsschritt 21 kann beispielsweise auf Anforderung eines Kontrollfahrzeugs 6 oder periodisch ausgehend vom Vermittlungsserver 7 aus erfolgen.

In den Kontrollfahrzeugen 6 werden die so erhaltenen Zellkennungen CID_{Aj} dem Benutzer des Kontrollfahrzeugs 6 zur Auswahl angeboten. Dies kann in Form einer tabellarischen Liste auf einer Ausgabeeinrichtung (Monitor, Display) im Kontrollfahrzeug 6 erfolgen, bevorzugt auf einem Bildschirm 22 unter Verwendung einer im Kontrollfahrzeug 6 oder dem Vermittlungsserver 7 gespeicherten digitalen Landkarte, in welcher die Zellen Cⱼ mit ihren Zellkennungen CID_{Aj} als geographische Bereiche mit ihren jeweiligen Grenzen G angezeigt werden. Optional können die in einer bestimmten Zelle Cⱼ registrierten Aufzeichnungsfahrzeug-Kennungen Aⱼ, d.h. sich dort aufhaltende Aufzeichnungsfahrzeuge 5, aufgelistet werden.

Der Benutzer des Kontrollfahrzeugs 6 kann nun anhand der auf dem Bildschirm 22 dargebotenen Informationen eine (oder auch mehrere) Zellkennungen auswählen. Die in einem Kontrollfahrzeug 6 und der Kontrollfahrzeug-Kennung B₁, B₂, ..., allgemein Bₖ, ausgewählte(n) Zellkennung(en) wird/werden im weiteren mit CID_{B1}, CID_{B2}, ..., allgemein CID_{Bk} bezeichnet.

Der Schritt des manuellen Auswählens der jeweiligen Zellkennung(en) CID_{Bk} ist strichliert bei 23 gezeigt und mündet in einem Schritt 24, in welchem die ausgewählte(n) Zellkennung(en) CID_{Bk} zusammen mit der Kennung Bₖ des Kontrollfahrzeugs 6 an den Vermittlungsserver 7 gesandt wird (27).

Die Kontrollfahrzeug-Kennung Bₖ kann wieder von jeder beliebigen, zuvor im Zusammenhang mit der Aufzeichnungsfahrzeug-Kennung Aⱼ genannten Art sein und dient zur eindeutigen Identifikation des jeweiligen Kontrollfahrzeugs 6 im Mobilfunknetz N. Es versteht sich, dass die Kontrollfahrzeuge 6, wenn sie eine bestimmte Zellkennung CID_{Bk} nicht mehr auswählen (buchen), auch entsprechende Abwähl- bzw. Ent-Buchungsnachrichten 27 (bzw. 43, siehe Fig. 4c) an den Vermittlungsserver 7 senden.

Der Vermittlungsserver 7 verfügt damit über eine aktuelle Tabelle 28 von jeweils von einem Kontrollfahrzeug 6 mit der Kennung Bₖ ausgewählten Zellkennungen CID_{Bk}, wobei ein Kontrollfahrzeug 6 auch mehr als eine ausgewählte Zellkennung CID_{Bk} haben kann.

In einem anschließenden Zuordnungsschritt 29 können nun im Vermittlungsserver 7 Kontrollfahrzeug-Kennungen Bₖ zu jenen Aufzeichnungsfahrzeug-Kennungen Aⱼ zugeordnet werden, zu welchen eine den ausgewählten Zellkennungen CID_{Bk} jeweils gleiche Zellkennung CID_{Aj} registriert ist. Die ausgewählten Zellkennungen CID_{Bk} der Tabelle 28 werden also hinsichtlich ihres Vorkommens in der Registrierungstabelle 20 überprüft und, wenn sie dort vorkommen, wird die jeweilige Kontrollfahrzeug-Kennung Bₖ der jeweiligen Aufzeichnungsfahrzeug-Kennung Aⱼ zugeordnet. Damit "buchen" bzw. "abonnieren" Kontrollfahrzeuge 6 (Sammler) gleichsam Aufzeichnungsfahrzeuge 5 (Jäger) für das anschließende Beziehen von Deliktdatensätzen, welches anhand der Fig. 4b und 4c ausführlicher erläutert wird. Der Zuordnungsschritt 29 führt damit zu einer Zuordnungstabelle 30 im Vermittlungsserver 7, in welcher zu einem Aufzeichnungsfahrzeug 5 mit der Aufzeichnungsfahrzeug-Kennung Aⱼ dessen - in Bezug auf die Zellkennungen CIDᵢ - "Abonnenten"-Kontrollfahrzeuge 6 mit der Kontrollfahrzeug-Kennung Bₖ enthalten sind.

In einer vereinfachten Ausführungsform kann die landkartenmäßige Aufbereitung der Mobilfunkzellen Cⱼ auf dem Bildschirm 22 entfallen, und die im Schritt 21 erhaltenen auswählbaren Zellkennungen CID_{Aj} können beispielsweise in Form einer Liste ausgegeben werden. Alternativ kann der Schritt 21 und die Ausgabe auf einer Anzeige 22 überhaupt entfallen und der Benutzer wählt von sich aus, z.B. anhand von Landkarten, Nachschlagetabellen usw., eine Zellkennung CID_{Bk} im Schritt 23 aus, unabhängig davon, ob sich Aufzeichnungsfahrzeuge 5 in der entsprechenden Zelle Cⱼ aktuell befinden oder nicht.

In einer weiteren Ausführungsform kann anstelle des manuellen Auswahlschrittes 23 und der optionalen vorgeordneten Schritte 21, 22 eine Zellkennung CID_{Bk} vom Kontrollfahrzeug 6 auch automatisch ausgewählt werden, siehe Schritt 25. Im Schritt 25 ermittelt das Kontrollfahrzeug 6 beispielsweise seine eigene Zellkennung CID_{Bk} im Mobilfunknetz N (analog dem Schritt 18), z.B. durch Abfragen von Kommunikationsparametern seines eigenen Mobilfunknetz-Sendeempfängers 26 (Fig. 3), und führt diese als "ausgewählte" Zellkennung CID_{Bk} den Buchungs - und Zuordnungsschritten 24, 27, 29 zu. Das Kontrollfahrzeug 6 abonniert damit die in seiner eigenen Mobilfunknetz-Zelle Cₖ befindlichen Aufzeichnungsfahrzeuge 5.

Unter Bezugnahme auf die Fig. 2 und 4b werden nun die Funktionsweise des Aufzeichnungsfahrzeugs 5 und das bei der Passage eines Fahrzeugs 2 ablaufende Aufzeichnungsverfahren näher erläutert. Bei Annäherung des Fahrzeugs 2 an das Aufzeichnungsfahrzeug 5 (Schritt 31) wird in einem ersten Schritt 32 das Kennzeichen LPN des Fahrzeugs 2 mit Hilfe der Kennzeichenleseeinrichtung 12 von der Kennzeichentafel 13 gelesen (Pfeil 16). Der Schritt 32 kann auch zu jedem späteren Zeitpunkt des Verfahrens von Fig. 4b ausgeführt werden, solange das Kennzeichenleseergebnis LPN noch nicht benötigt wird, so beispielsweise auch später durch Lesen der rückwärtigen Kennzeichentafel 13 des Fahrzeugs 2.

Anschließend wird in einem Schritt 33 mit Hilfe des Sensors 14 der Formparameter CL des Fahrzeugs 2 erfasst, im gezeigten Beispiel durch Laserscannen und Detektieren der Achsanzahl des Fahrzeugs 2, woraus eine achsbezogene Fahrzeugklasse ("class") als Formparameter CL ermittelt wird.

In einem anschließenden Entscheidungsschritt 34 wird aufgrund des Formparameters CL überprüft, ob das Fahrzeug 2 überhaupt mautpflichtig ist oder nicht. Beispielsweise könnten zweiachsige Fahrzeuge 2 als nicht-mautpflichtig und Fahrzeuge 2 mit mehr als zwei Achsen als mautpflichtig definiert sein. Wenn der Formparameter CL Mautpflicht anzeigt (Zweig "y"), wird im anschließenden Schritt 35 die OBU 3 mit Hilfe des DSRC-Sendeempfängers 11 kontaktiert (Pfeil 17). Dabei wird der Mautparameter OC aus der OBU 3 ausgelesen und eine erfolgreiche Auslesung zeigt gleichzeitig an, dass die OBU 3 vorhanden ist und funktioniert. Im darauffolgenden Entscheidungsschritt 36 wird bei einem Fehlschlagen des Auslesens (Zweig "n") direkt zum Schritt 38 der Erzeugung eines Deliktdatensatzes DELR übergegangen.

Andernfalls (Zweig "y" von Schritt 36) wird in der weiteren Entscheidung 37 überprüft, ob der erfasste Formparameter CL und der ausgelesene Mautparameter OC zueinander passen bzw. konsistent sind, d.h. der Mautparameter OC der OBU 3 so eingestellt ist, dass er dem aufgrund der Außenform des Fahrzeugs 2 erfassten Formparameter CL entspricht. Wenn ja (Zweig "y"), ist alles in Ordnung und das Verfahren endet bei 39. Wenn nein (Zweig "n"), liegt eine Inkonsistenz vor, welche ein mögliches Mautdelikt darstellt, und es wird zu Schritt 38 des Erzeugens des Deliktdatensatzes DELR übergegangen.

Im Schritt 38 wird der Deliktdatensatz DELR erzeugt, welcher den erfassten Formparameter CL, den ausgelesenen Mautparameter OC und das Kennzeichenleseergebnis LPN enthält, sowie optional weitere Daten wie den aktuellen Ort ("Deliktort") DO und die aktuelle Zeit ("Deliktzeit") DT des Aufzeichnungsvorgangs, aus der OBU 3 ausgelesene weitere Stammdaten wie OBU-Kennung OID, Benutzer-Stammdaten, Fahrzeug-Stammdaten usw. Der Deliktdatensatz DELR enthält auch die Kennung Aⱼ des jeweiligen Kontrollfahrzeugs 5.

Der Deliktort DO kann dabei auch verschiedenste Arten ermittelt werden: Das Aufzeichnungsfahrzeug 5 kann über eine eigene Positionsbestimmungseinrichtung verfügen, z.B. einen Satellitennavigationsempfänger, und den aktuellen Ort der Passage als Deliktort DO aufzeichnen. Alternativ kann die OBU 3, insbesondere wenn sie von selbst-verortendem Typ ist, ihre aktuelle Position als Deliktort DO dem Aufzeichnungsfahrzeug 5 zur Verfügung stellen. Auch die bekannten Orte benachbarter Funkbaken eines bakenbasierten Straßenmautsystems 1 können näherungsweise herangezogen werden.

Der Deliktdatensatz DELR wird anschließend im Schritt 40 an den Vermittlungsserver 7 zur Weiterleitung (Schritt 41) an die Kontrollfahrzeuge 6 gesandt.

Es versteht sich, dass die Schritte 32 bis 37 - soweit sie nicht einander voraussetzen - auch in anderer Reihenfolge vorgenommen werden können.

Die im Vermittlungsserver 7 und einem beispielhaften Kontrollfahrzeug 6 ablaufenden Schritte werden anhand der Fig. 3 und 4c erläutert. Die Fig. 3a und 3b zeigen die Situation bei der Passage eines Kontrollfahrzeugs 6 an einem zu kontrollierenden Fahrzeug 2 zu zwei aufeinanderfolgenden Zeitpunkten. In Vorbereitung (oder während) einer solchen Kontrolle werden den Kontrollfahrzeugen 6 vom Vermittlungsserver 7 jene Deliktdatensätze DELR weitergeleitet, welche von in der Zuordnungstabelle 30 abonnierten Kontrollfahrzeugen 5 stammen. Dazu benutzt der Vermittlungsserver 7 die Zuordnungstabelle 30 zur Adressierung, um den Deliktdatensatz DELR eines Aufzeichnungsfahrzeugs 5 mit der Kennung Aⱼ an all jene Kontrollfahrzeuge 6 mit den Kennungen Bₖ weiterzuleiten, welche in der Tabelle 30 eingetragen sind. In dem gezeigten Beispiel werden Deliktdatensätze DELR des Aufzeichnungsfahrzeugs 5 mit der Kennung A₁ an die Kontrollfahrzeuge 6 der Kennungen B₁, B₄ weitergeleitet; jene des Aufzeichnungsfahrzeugs 5 mit der Kennung A₂ an die Kontrollfahrzeuge mit den Kennungen B₂, B₃ und B₇, usw. usf.

Ein Kontrollfahrzeug 6 nimmt die ihm auf diese Weise (Schritt 41) bereitgestellten Deliktdatensätze DELR in eine lokale Deliktdatensatzliste locDELR 42 auf.

Das Weiterleiten der Deliktdatensätze DELR im Schritt 41 kann sowohl fortlaufend, z.B. periodisch oder im Anlassfall, erfolgen, beispielsweise indem jeder einzelne Deliktdatensatz DELR vom Vermittlungsserver 7 an das jeweilige Kontrollfahrzeug 6 gesandt wird, oder stapelweise (in Batch-Verarbeitung), indem sich ein Kontrollfahrzeug 6 jeweils die zu einem bestimmten Zeitpunkt individuell bereitgestellten Deliktdatensätze DELR vom Vermittlungsserver 7 abholt oder von diesem geschickt bekommt.

Die Deliktdatensätze DELR tragen mit ihrer optionalen Deliktzeit DT auch jeweils einen "Zeitstempel", der ihre zeitliche Gültigkeit begrenzen kann: So können "zu alte" Deliktdatensätze DELR, d.h. solche, deren Zeitstempel DT außerhalb eines vorgegebenen Zeitraums liegt, automatisch verworfen werden, sowohl im Vermittlungsserver 7 als auch im Kontrollfahrzeug 6, und/oder der Vermittlungsserver 7 kann einem Kontrollfahrzeug 6 auch nur "aktuelle" Deliktdatensätze DELR weiterleiten, d.h. solche, deren Zeitstempel DT innerhalb eines vorgegebenen Zeitraums liegt.

In der Registrierungsphase Fig. 4a "abonnierten" die Kontrollfahrzeuge 6 Deliktdatensätze DELR von Aufzeichnungsfahrzeugen 6 aus ausgewählten Mobilfunknetz-Zellen Cₖ, und dies z.B. solange, bis sie in einem Schritt 43 eine Abwähl- bzw. Ent-Buchungsnachricht 27 an den Vermittlungsserver 7 senden, wie oben erläutert. Die Kontrollfahrzeuge 6 sind auf dieser Weise jeweils mit aktuellen Deliktdatensätzen DELR aus der bzw. den gewünschten Mobilfunknetz-Zelle(n) Cₖ bestückt und können bei der Passage bzw. Kontrolle eines Fahrzeugs 2 Kontrolltasks 44 ausführen, welche jeweils auf die lokale Deliktdatensatzliste 42 zugreifen.

In jedem Kontrolltask 44 wird gemäß den Fig. 3 und 4c bei Annäherung eines Fahrzeugs 2 (Schritt 45) in einem ersten Schritt 46 das Kennzeichen LPN von der Kennzeichentafel 13 mit Hilfe einer Kennzeichenleseeinrichtung 47 des Kontrollfahrzeugs 6 automatisch gelesen (Pfeil 48). Anschließend sucht das Kontrollfahrzeug 6 im Schritt 49 einen dazu passenden Deliktdatensatz DELR aus seiner lokalen Deliktdatensatzliste 42 heraus, soferne ein solcher vorhanden. Wenn zu dem Kennzeichenleseergebnis LPN kein Deliktdatensatz DELR vorhanden ist (Zweig "n" im Überprüfungsschritt 50), endet der Task 44 bei 51 und das Kennzeichenleseergebnis LPN kann z.B. zwecks Vertraulichkeit wieder gelöscht werden. Existiert jedoch ein Deliktdatensatz DELR zum Kennzeichenleseergebnis LPN (Zweig "y"), wird zum Alarmschritt 52 verzweigt, in welchem das Kontrollfahrzeug 6 eine Alarmmeldung an seine Besatzung ausgibt.

Die Alarmmeldung kann beispielsweise ein optischer oder akustischer Alarm sein oder eine Anzeige auf dem Bildschirm 22, welche gleichzeitig das gelesene Kennzeichen LPN und den Deliktdatensatz DELR anzeigt. Die Besatzung kann dann entsprechende Ahndungsmaßnahmen ergreifen, z.B. das Fahrzeug 2 anhalten, die OBU 3 weiter überprüfen und gegebenenfalls eine entsprechende Nachmaut verrechnen oder Strafe verhängen. Die Alarmmeldung kann zusätzlich automatisch auf einer nach außen sichtbaren Signaleinrichtung 55 des Kontrollfahrzeugs 6 für das kontrollierte Fahrzeug 2 angezeigt werden (Pfeil 56), um dieses z.B. zum Anhalten aufzufordern, beispielsweise mit einer Leuchtschrift "STOP".

Optional kann der Task 44 zusätzlich auch nochmals die OBU 3 mit Hilfe eines DSRC-Sendeempfängers 53 des Kontrollfahrzeugs 6 ausgelesen werden (Pfeil 54), z.B. für weitere Konsistenzprüfungen oder Identifikationen.

Das Aufzeichnungsfahrzeug 5 kann optional mit einer Einrichtung 57 zur Messung von Geschwindigkeit und Fahrtrichtung, d.h. des Bewegungsvektors v, eines Fahrzeugs 2 ausgestattet werden. Die Einrichtung 57 kann auch durch eine als Videokamera ausgebildete Kennzeichenleseeinrichtung 12, in deren Bildern Bewegungen detektiert werden können, oder einen als Doppler-Radar ausgeführten DSRC-Sendeempfänger 11 oder durch entsprechende Messungen mit Hilfe des Sensors 14, z.B. Laser- oder Lidar-Messungen am Abtaststrahl bzw. -fächer 15, realisiert werden.

Die Geschwindigkeitsmesseinrichtungen 11, 12, 14, 57 des Aufzeichnungsfahrzeugs 5 können überdies zur Detektion allgemeiner Verkehrsdelikte der Fahrzeuge 2 eingesetzt werden, z.B. zur Detektion von Geschwindigkeitsübertretungsdelikten. Der Bewegungsvektor v des Fahrzeugs 2 zum Deliktzeitpunkt DT kann in den Deliktdatensatz DELR integriert werden.

Die Erfindung ist demgemäß nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zur Kontrolle in einem Straßenmautsystem (1), das auf von Fahrzeugen (2) mit Fahrzeugkennzeichen (LPN) mitgeführten Onboard-Units (3) basiert, unter Verwendung zumindest eines Aufzeichnungsfahrzeugs (5) und zumindest eines Kontrollfahrzeugs (6), die eindeutige Kennungen (Aⱼ, Bₖ) haben und über ein zellulares Mobilfunknetz (N) mit einem Vermittlungsserver (7) in Verbindung stehen, umfassend:
Registrieren (19) der Kennung (Aⱼ) eines Aufzeichnungsfahrzeugs (5) und seiner aktuellen Mobilfunknetz-Zellkennung (CID_{Aj}) im Vermittlungsserver (7);
Auswählen (23 - 25) einer Zellkennung (CID_{Bk}) in einem Kontrollfahrzeug (6) und Senden (27) der ausgewählten Zellkennung (CID_{Bk}) und der Kennung (Bₖ) des Kontrollfahrzeugs (6) an den Vermittlungsserver (7);
Zuordnen (29) der Kontrollfahrzeug-Kennung (Bₖ) zu jener Aufzeichnungsfahrzeug-Kennung (Aⱼ), zu der eine der ausgewählten Zellkennung (CID_{Bk}) gleiche Zellkennung (CID_{Aj}) registriert ist;
Detektieren (33, 35) eines Verkehrs- oder Mautdelikts einer Onboard-Unit (3) oder eines diese mitführenden Fahrzeugs (2) und Lesen dessen Fahrzeugkennzeichens (LPN) mittels des Aufzeichnungsfahrzeugs (5);
Senden (40) eines Deliktdatensatzes (DELR) enthaltend das gelesene Kennzeichen (LPN) und die Aufzeichnungsfahrzeug-Kennung (Aⱼ) an den Vermittlungsserver (7), Ermitteln (30) der zugeordneten Kontrollfahrzeug-Kennung (Bₖ) und Senden (41) des Deliktdatensatzes (DELR) an das durch die ermittelte Kennung (Bₖ) identifizierte Kontrollfahrzeug (6);
Lesen (46) des Kennzeichens (LPN) eines passierenden Fahrzeugs (2) mittels des Kontrollfahrzeugs (6), Überprüfen (49, 50) des gelesenen Kennzeichens (LPN) mit dem im Deliktdatensatz (DELR) enthaltenen Kennzeichen (LPN) und, im Falle der Übereinstimmung, Ausgeben (52) einer Alarmmeldung.

2. Verfahren nach Anspruch 1, **dadurch gekennzeichnet, dass** die aktuelle Zellkennung (CID_{Aj}) des Aufzeichnungsfahrzeugs (5) im Aufzeichnungsfahrzeug (5) ermittelt und von diesem an den Vermittlungsserver (7) gesandt wird.

3. Verfahren nach Anspruch 1, **dadurch gekennzeichnet, dass** die aktuelle Zellkennung (CID_{Aj}) des Aufzeichnungsfahrzeugs (5) im Vermittlungsserver (7) anhand von Informationen aus dem Mobilfunknetz (N) ermittelt wird.

4. Verfahren nach einem der Ansprüche 1 bis 3, **dadurch gekennzeichnet, dass** das Auswählen der Zellkennung (CID_{Bk}) im Kontrollfahrzeug (6) durch Benutzerauswahl (23) erfolgt.

5. Verfahren nach Anspruch 4, **dadurch gekennzeichnet, dass** die im Vermittlungsserver (7) registrierten Zellkennungen (CID_{Aj}) an das Kontrollfahrzeug (6) gesandt (21) und dort dem Benutzer zur Benutzerauswahl (23) angezeigt werden.

6. Verfahren nach Anspruch 5, **dadurch gekennzeichnet, dass** die auswählbaren Zellkennungen (CID_{Aj}) dem Benutzer auf einer Anzeige (22) als geographische Bereiche (Cⱼ) einer digitalen Landkarte angezeigt werden.

7. Verfahren nach einem der Ansprüche 1 bis 3, **dadurch gekennzeichnet, dass** die aktuelle Mobilfunknetz-Zellkennung (CID_{Bk}) des Kontrollfahrzeugs (6) ermittelt und als ausgewählte Zellkennung (CID_{Bk}) verwendet wird.

8. Verfahren nach einem der Ansprüche 1 bis 7, **dadurch gekennzeichnet, dass** beim Detektieren des Verkehrs- oder Mautdelikts der Ort des Aufzeichnungsfahrzeugs (5) mittels Satellitennavigation bestimmt und als Deliktort (DO) in den Deliktdatensatz (DELR) aufgenommen wird.

9. Verfahren nach einem der Ansprüche 1 bis 8 zur Kontrolle eines Straßenmautsystems mit Onboard-Units (3), aus welchen zumindest ein fahrzeugformspezifischer Mautparameter (OC) über eine DSRC-Funkschnittstelle (17, 54) auslesbar ist, **gekennzeichnet durch** die vom Aufzeichnungsfahrzeug (5) ausgeführten Schritte:
Auslesen (35) des Mautparameters (OC) eines passierenden Fahrzeugs (2) mittels eines DSRC-Sendeempfängers (11),
Erfassen (33) eines Formparameters (CL) des Fahrzeugs (2) mittels eines Sensors (14),
Prüfen (37) des Mautparameters (OC) auf Konsistenz mit dem Formparameter (CL) und, bei Inkonsistenz,
Senden (40) des Deliktdatensatzes (DELR).

10. Verfahren nach Anspruch 9, **dadurch gekennzeichnet, dass** der Formparameter (CL) und der Mautparameter (OC) jeweils eine Fahrzeuglänge oder -achsanzahl ist.

11. Verfahren nach Anspruch 9 oder 10, **dadurch gekennzeichnet, dass** als Sensor (14) ein Laserscanner verwendet wird.

12. Verfahren nach einem der Ansprüche 1 bis 11, **dadurch gekennzeichnet, dass** im Aufzeichnungsfahrzeug (5) Geschwindigkeit und bevorzugt Fahrtrichtung eines passierenden Fahrzeugs (2) gemessen werden und das Verkehrs- oder Mautdelikt auch auf Grundlage dieser Messwerte (v) bestimmt wird.

## Claims

1. A control method for a road toll system (1) which is based on on-board units (3) carried by vehicles (2) having vehicle license plate numbers (LPN), using at least one recording vehicle (5) and at least one control vehicle (6), which have unique identifiers (Aⱼ, Bₖ) and are connected to a switching server (7) via a cellular mobile communication network (N), comprising:
registering (19) the identifier (Aⱼ) of a recording vehicle (5) and the current mobile communication network cell identifier (CID_{Aj}) thereof in the switching server (7);
selecting (23 to 25) a cell identifier (CID_{Bk}) in a control vehicle (6) and transmitting (27) the selected cell identifier (CID_{BK}) and the identifier (Bₖ) of the control vehicle (6) to the switching server (7);
associating (29) the control vehicle identifier (Bₖ) with the recording vehicle identifier (Aⱼ) for which a cell identifier (CID_{Aj}) that is identical to the selected cell identifier (CID_{Bk}) is registered;
detecting (33, 35) a traffic or toll violation of an on-board unit (3) or of a vehicle (2) carrying the same and reading the vehicle license plate number (LPN) thereof by means of the recording vehicle (5);
transmitting (40) a violation data record (DELR), containing the read license plate number (LPN) and the recording vehicle identifier (Aⱼ), to the switching server (7), determining (30) the assigned control vehicle identifier (Bₖ), and transmitting (41) the violation data record (DELR) to the control vehicle (6) identified by the determined identifier (Bₖ); and
reading (46) the license plate number (LPN) of a passing vehicle (2) by means of the control vehicle (6), comparing (49, 50) the read license plate number (LPN) to the license plate number (LPN) contained in the violation data record (DELR), and outputting (52) an alert message if the license plate numbers agree with each other.

2. The method according to claim 1, **characterized in that** the current cell identifier (CID_{Aj}) of the recording vehicle (5) is determined in the recording vehicle (5) and transmitted by the same to the switching server (7).

3. The method according to claim 1, **characterized in that** the current cell identifier (CID_{Aj}) of the recording vehicle (5) is determined in the switching server (7) based on information from the mobile communication network (N).

4. The method according to any one of claims 1 to 3, **characterized in that** the selection of the cell identifier (CID_{Bk}) in the control vehicle (6) is carried out by user selection (23).

5. The method according to claim 4, **characterized in that** the cell identifiers (CID_{Aj}) registered in the switching server (7) are transmitted (21) to the control vehicle (6) where they are displayed to the user for user selection (23).

6. The method according to claim 5, **characterized in that** the selectable cell identifiers (CID_{Aj}) are displayed to the user on a display (22) as geographical regions (Cⱼ) of a digital map.

7. The method according to any one of claims 1 to 3, **characterized in that** the current mobile communication network cell identifier (CID_{Bk}) of the control vehicle (6) is determined and used as the selected cell identifier (CID_{Bk}).

8. The method according to any one of claims 1 to 7, **characterized in that**, when the traffic or toll violation is detected, the location of the recording vehicle (5) is determined by means of satellite navigation and added to the violation data record (DELR) as the location of the violation (DO).

9. The control method according to any one of claims 1 to 8 for a road toll system using on-board units (3), from which at least one vehicle shape-specific toll parameter (OC) can be read out via a DSRC radio interface (17, 54), **characterized by** the following steps carried out by the recording vehicle (5):
reading out (35) the toll parameter (OC) of a passing vehicle (2) by means of a DSRC transceiver (11);
detecting (33) a shape parameter (CL) of the vehicle (2) by means of a sensor (14);
checking (37) the toll parameter (OC) for consistency with the shape parameter (CL) and, in the case of inconsistency,
transmitting (40) the violation data record (DELR).

10. The method according to claim 9, **characterized in that** the shape parameter (CL) and the toll parameter (OC) are a respective vehicle length or a respective number of vehicle axles.

11. The method according to claim 9 or 10, **characterized in that** a laser scanner is used as the sensor (14).

12. The method according to any one of claims 1 to 11, **characterized in that** the speed, and preferably the driving direction, of a passing vehicle (2) are measured in the recording vehicle (5) and the traffic or toll violation is also determined based on these measured values (v).

## Revendications

1. Procédé pour le contrôle dans un système de péage routier (1) basé sur des unités de bord (3) embarquées par des véhicules (2) avec des immatriculations de véhicule (LPN), utilisant au moins un véhicule de marquage (5) et au moins un véhicule de contrôle (6) possédant des identificateurs (Aⱼ, Bₖ) univoques et reliés à un serveur de médiation (7) par le biais d'un réseau cellulaire mobile (N), comprenant :
l'enregistrement (19) de l'identificateur (Aⱼ) d'un véhicule de marquage (5) et de son identificateur cellulaire de réseau radio mobile (CID_{Ai}) actuel dans le serveur de médiation (7) ;
sélection (23 - 25) d'un identificateur cellulaire (CID_{Bk}) dans un véhicule de contrôle (6) et envoi (27) de l'identificateur cellulaire (CID_{Bk}) sélectionné et de l'identificateur (Bₖ) du véhicule de contrôle (6) au serveur de médiation (7) ;
attribution (29) de l'identificateur de véhicule de contrôle (Bₖ) à l'identificateur de véhicule de marquage (Aⱼ) pour lequel un identificateur cellulaire (CID_{Aj}) identique à l'identificateur cellulaire (CID_{Bk}) sélectionné est enregistré ;
détection (33, 35) d'une infraction routière ou de péage d'une unité de bord (3) ou d'un véhicule (2) transportant celle-ci, et lecture de son immatriculation de véhicule (LPN) au moyen du véhicule de marquage (5) ;
envoi (40) d'un ensemble de données d'infraction (DELR) contenant l'immatriculation (LPN) lue et l'identificateur de véhicule de marquage (Aⱼ) au serveur de médiation (7), détermination (30) de l'identificateur de véhicule de contrôle (Bₖ) attribuée et envoi (41) de l'ensemble de données d'infraction (DELR) au véhicule de contrôle (6) identifié par l'identificateur (Bₖ) déterminé ;
lecture (46) de l'immatriculation (LPN) d'un véhicule en circulation (2) au moyen du véhicule de contrôle (6), vérification (49, 50) de l'immatriculation (LPN) lue avec l'immatriculation (LPN) contenue dans l'ensemble de données d'infraction (DELR), et, dans le cas d'une concordance, émission (52) d'un message d'alerte.

2. Procédé selon la revendication 1, **caractérisé en ce que** l'identificateur cellulaire (CID_{Aj}) actuel du véhicule de marquage (5) est déterminé dans le véhicule de marquage (5) et envoyé par celui-ci au serveur de médiation (7).

3. Procédé selon la revendication 1, **caractérisé en ce que** l'identificateur cellulaire (CID_{Aj}) actuel du véhicule de marquage (5) est déterminé dans le serveur de médiation (7) à l'aide d'informations tirées du réseau cellulaire mobile (N).

4. Procédé selon l'une des revendications 1 à 3, **caractérisé en ce que** la sélection de l'identificateur cellulaire (CIDBk) dans le véhicule de contrôle (6) est effectuée par un choix d'utilisateur (23).

5. Procédé selon la revendication 4, **caractérisé en ce que** les identificateurs cellulaires (CID_{Aj}) enregistrés dans le serveur de médiation (7) sont envoyés (21) au véhicule de contrôle (6), où ils sont indiqués à l'utilisateur en vue du choix d'utilisateur (23).

6. Procédé selon la revendication 5, **caractérisé en ce que** les identificateurs cellulaires (CID_{Aj}) sélectionnables sont indiqués à l'utilisateur en tant que zones géographiques (Cⱼ) d'une carte routière numérique sur un dispositif d'affichage (22).

7. Procédé selon l'une des revendications 1 à 3, **caractérisé en ce que** l'identificateur cellulaire de réseau cellulaire mobile (CID_{Bk}) actuel du véhicule de contrôle (6) est déterminé et utilisé en tant qu'identificateur cellulaire (CID_{Bk}) sélectionné.

8. Procédé selon l'une des revendications 1 à 7, **caractérisé en ce que** lors de la détection d'infraction routière ou de péage, le lieu du véhicule de marquage (5) est déterminé au moyen d'une navigation par satellite et enregistré en tant que lieu d'infraction (DO) dans l'ensemble de données d'infraction (DELR).

9. Procédé selon l'une des revendications 1 à 8, pour le contrôle d'un système de péage routier avec des unités de bord (3), à partir desquelles au moins un paramètre de péage (OC) spécifique à la forme du véhicule peut être lu par le biais d'une interface radio DSRC (17, 54), **caractérisé par** les étapes suivantes exécutées par le véhicule de marquage (5) :
lecture (35) du paramètre de péage (OC) d'un véhicule (2) en circulation, au moyen d'un émetteur-récepteur DSRC (11),
détection (33) d'un paramètre de forme (CL) du véhicule (2) au moyen d'un capteur (14),
vérification (37) du paramètre de péage (OC) quant à sa concordance avec le paramètre de forme (CL), et, en cas de non-concordance,
envoi (40) de l'ensemble de données d'infraction (DELR).

10. Procédé selon la revendication 9, **caractérisé en ce que** le paramètre de forme (CL) et le paramètre de péage (OC) représentent respectivement une longueur de véhicule ou un nombre d'essieux de véhicule.

11. Procédé selon la revendication 9 ou 10, **caractérisé en ce qu'**un scanner laser est utilisé en tant que capteur (14).

12. Procédé selon l'une des revendications 1 à 11, **caractérisé en ce que** la vitesse et de préférence la direction d'avancement d'un véhicule (2) en circulation sont mesurées dans le véhicule de marquage (5), et l'infraction routière ou de péage est également déterminée sur la base de ces valeurs de mesure (v).
